# EUROPEAN PATENT SPECIFICATION

(11) **EP 1 476 667 B1**
(45) Date of publication and mention of the grant of the patent: **16.11.2005**
(21) Application number: 03734929.7
(22) Date of filing: 23.01.2003
(51) Int. Cl.: F16B 41/00, E05B 35/00

(54) **UNLOCKING FIXTURE FOR LOCKING DEVICE FOR A WHEEL BOLT**
ENTRIEGELUNGSVORRICHTUNG FÜR VERRIEGELUNGSEINRICHTUNG FÜR EINEN RADBOLZEN
ACCESSOIRE DE DEVERROUILLAGE POUR UN DISPOSITIF DE VERROUILLAGE DESTINE A UN BOULON DE ROUE

(30) Priority: 28.01.2002 SE 0200257
(43) Date of publication of application: 17.11.2004
(73) Proprietor: AB J.E. Bergströms Mekaniska Verkstad, 718 22 Frövi (SE)
(72) Inventor: BERGSTRÖM, Peter, S-718 31 Frövi (SE); BERGSTRÖM, Kent, S-718 31 Frövi (SE)
(74) Representative: Westman, Per Börje Ingemar
(86) International application number: PCT/SE2003/000106
(87) International publication number: WO 2003/064869

(56) References cited:
- EP-A1- 1 002 962
- EP-A2- 0 463 744
- SU-A1- 1 760 201
- US-A- 3 978 698
- US-A- 4 870 842

## Description

The present invention refers to an unlocking fixture for a locking device for a wheel bolt of the type which is encompassed by applicant's earlier Swedish patent application No. 0103410-7.

Owners of wheel-borne vehicles sometimes experience thefts of rims and tyres. Particularly exposed are vehicles having rims made of aluminium, but also steel rims are subjected to thefts, and the purpose of the invention is to provide a locking device, which is intended to make such thefts more difficult.

This is achieved by means of a locking device for a wheel bolt designed in accordance with the earlier application, and of the type which is equipped with a bolt head and a threaded shaft portion, whereby the bolt head on its end facing away from the bolt shaft is provided with a part acting as a key grip, and a coaxial, threaded bore, formed as a blind hole, which opens at the end of the bolt facing away from the shaft portion, whereby in the bolt head In the area nearest to the end of the bolt facing away from the shaft portion are provided at least two recesses extending radially from the bore, and where a screw is tightenable In the coaxial bore provided in the bolt head, whereby the screw is provided with a radially extending recess, and being arranged in its position screwed into the bore in the bolt head, to extend through and support a first, Inner rotatable ring and a second, outer rotatable ring arranged coaxially therewith, whereby each one of the inner and outer ring is provided with a through-opening, having substantially the same dimensions, and where from each one of these through-openings extends a continuous radial groove, which continuous radial grooves have substantially the same measures as the radially extending recess the screw, and the inner and outer ring are rotatably arranged about the screw and relative to each other, thus that the radial continuos grooves and the radially extending recess by mutual rotation can be brought to coincide and thereby form a continuous channel from the end of the screw facing away from the bolt head and till the area around the bore in the bolt head, and where an axially projecting cam provided on a hub-shaped center part, is arranged to be inserted In the continuous channel, thus that its outer cam part is situated in one of the recesses in the bolt head and its inner cam part in a space between the inner ring and the outer ring, whereby the inner and outer rings by rotation relative to each other are adjustable thus that portions of the channel formed by the through-holes and the radially extending recess are angularly displaced and thereby prevents the outer and/or inner cam part from being pulled out.

with this device the possibilities of unlocking in an unauthorized manner are very limited, and it is almost impossible "to sense" an unlocking position. Furthermore it has proven itself that it is not possible, e.g. with a stethoscope, to hear when the lockparts snap from locked to open position. Attempts to bore out the locking device after removal of a protective cover have also failed, i.a. due to a hard body, e.g. In form of a ball, which has been provided in a bore in the center part.

Due to the ability of the locking device to withstand unlocking, a flat tyre or another damage to a tyre would for instance cause large problems to the car owner.

US-A-3-978 698 (corresponding to the preamble of claim 1) discloses a lock assembly for an automobile tire and wheel assembly incorporating an unlocking device, which is separate from the locking device, and which is equipped with means adapted to co-operate with the central threaded hole in the centre part of the locking device. This means operates with magnet force, for unlocking the locking device.

In order to make it possible for the car owner or another authorized person to unlock the wheel bolts mechanically in spite of the locking device and thereby be able to change wheel also under difficult conditions regarding weather and light, it has therefore been developed an unlocking device according to the present invention, by means of which the locking device shall give possibility to open only by turning of the unlocking device, and this has been achieved in that the unlocking device has been given the design defined in the characterizing part of the accompanying claim 1.

Hereinafter the invention will be further described as an embodiment with reference to the accompanying drawing figures.
Fig. 1 shows a schematic longitudinal section through a locking device fitted to a wheel bolt and for which the unlocking device according to the present invention is intended.
Fig. 2 shows a cross section corresponding to Fig. 1, with the exception, that the outer cover and the attachment screw therefore have been removed.
Fig. 3 is an end view from above of the different mutually rotatable parts forming part of the locking device.
Fig. 4 is a longitudinal cross section through an unlocking device according to the invention, and intended to cooperate with a locking device according to Fig. 1 for effecting unlocking thereof.
Fig. 5 shows an end view along line B-B in Fig. 4,
Fig. 6 is an end view along line A-A in Fig. 4, and
Fig. 7 shows schematically a portion of the locking device and the unlocking fixture In position for cooperation.

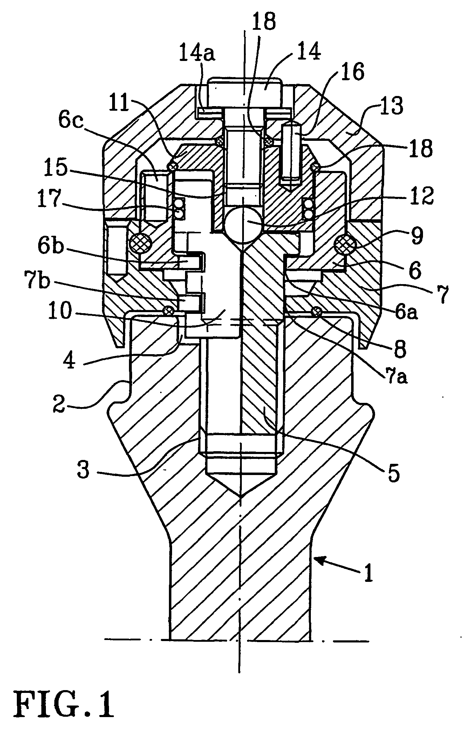

Fig. 1 shows in a longitudinal cross section a locking device for a wheel bolt of the type, for which the unlocking device according to the invention is intended to be used and the locking device is shown together with a wheel bolt 1, which in common manner is equipped with a threaded shaft portion, intended to be secured by screws to the wheel axle of a vehicle. In the figure is only shown the head 2 of the wheel bolt. This is provided with a coaxial, threaded bore 3, to which from the entrance side adjoins a number of - for instance 5 - uniformly distributed, radially directed recesses 4, the function of which will be described later on. In the bore 3 in the bolt 1 is screwed in a screw 5, which cooperates with and keeps an inner ring 6 in a position coaxially aligned with the wheel bolt, when the screw is in its screwed in position. The inner ring 6 cooperates with and urges an outer ring 7 against the end surface of the head 2 of the bolt. Between the outer ring 7 and the head 2 of the bolt there is preferably provided an O-ring 8, which acts as a seal and at the same time gives a soft contact between bolt and ring. At the contact between the inner ring 6 and the outer ring 7 is also provided an O-ring 9 for sealing of the joint.

Each one of the inner ring 6 and the outer ring 7 has a central through-opening 6a and 7a, resp. and furthermore a radial groove 6b, 7b extending from the central opening.

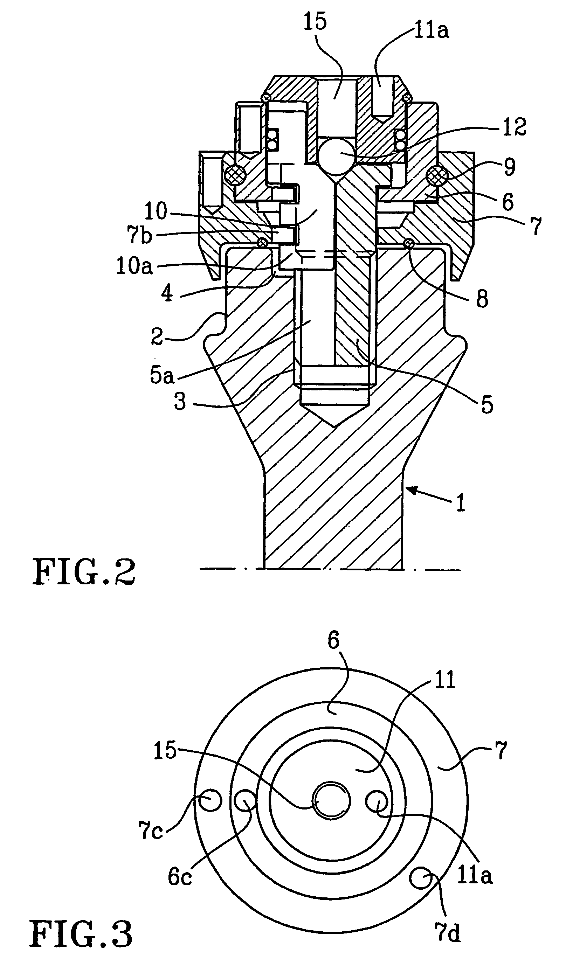

Also the screw 5 has a radially extending recess 5a (Fig. 2), the dimension of which substantially corresponds to the dimension for the radially extending grooves 6b, 7b In the inner and the outer ring 6, 7. When the position for the radial grooves 6b, 7b In the inner and outer rings 6, 7 fitted by means of the screw 5 in the bore 3 of the wheel bolt, coincide and also with the radially extending recess in the screw, a cam 10 is insertable in the passage formed by these grooves 6b, 7b and the recess 5a, which cam is fitted to a hub-formed center part 11, which is insertable in the inner ring 6. The cam 10 hereby is provided in axial direction with an outer cam part 10a and an inner cam part 10b (see Fig. 2), which are constitued by fixed locking rods, the radial and axial dimensions of which are somewhat smaller than the radial dimensions for the recesses 4 and the grooves 6b, 7b and the axial measures of the space between the recesses 4 and the adjacent side of the outer ring 7 and between the outer ring 7 and the inner ring 6, resp. The end of the center part facing the screw 5 acts as a seat for a ball 12, which also rests in a second seat formed in the rear end of the screw 5 facing away from the wheel bolt. This ball is primarily Intended for making attempts to bore out the locking device more difficult, but it also acts for reducing the friction and thereby facilitating the mutual rotation of the different cooperating parts. An external circular cover 13 is by means of an attachment screw 14, secured by a locking washer 14a, attachable to the center part 11, whereby the attachment screw 14 can be screwed into a central threaded bore 15 in the center part. The external cover is mainly intended to prevent entrance of dirt and for preventing clogging up of the dismounting holes In the inner and outer rings 6 and 7 and in the hub-part 11 resp. and it is arranged In mounted position, with its outer rim surface to contact the edge surface of the outer ring 7 facing away from the wheel bolt 1, and the external cover 13 is prevented from rotation relative the center part 11 by means of a pin 16, which is mounted in axial direction at the inner side of the cover, and is arranged to project into a corresponding axial bore in the center part 11 in the mounted position for the device. In the embodiment shown the cam 10 is arrested to the center part 11 by means of round wire catches 17, and between surfaces of the details in the device adjacent each other there is also an O-ring seal 18.

For mounting the locking device is used a mounting key, which is not shown here, but which is described in detail in the above-mentioned earlier patent application SE 0103410-7, and by means of which the inner ring 6 and the outer ring 7 are rotated so in relation to each other that the radial grooves in the two rings 6, 7 are situated just In front of each other. Thereupon the screw 5 is inserted in the two adjoined rings 6, 7, whereby it is simultaneously secured that the radial recess 5a in the screw will be situated just In front of the grooves in the rings 6, 7, thus that a continuous channel is formed. By means of the mounting key the joined unit consisting of inner and outer ring 6, 7 and screw 5, Is screwed into the threaded bore 3 In the wheel bolt 2. This screwing In continues until the screw 5 has been fully tightened in the bore 3, and the inner ring 6 and the outer ring 7 have reached their end positions, and the positions of the radial grooves in the inner 6 and outer ring 7 and in the screw 5 coincide with one of the recesses 4 in the wheel bolt. After that the center part 11 with the cam 10 arranged thereon is Inserted, thus that the cam enters the groove in the screw 5, and in the recess 4 in the head of the wheel bolt coinciding therewith. Thereafter the inner 6 and/or the outer ring 7 are turned in relation to their position when the center part was mounted, whereby the teeth of the cam 10 on the center part 11 will be displaced from their positions coinciding with the grooves in the inner and outer rings, and thereby lock the wheel bolt in position. The external cover 13 is positioned thus that its pin 16 (see Fig. 1) will enter in its bore In the center part, and thereupon it is possible to screw in the attachment screw 14 which is secured by the locking washer 14a and the locking device is mounted to the wheel bolt and can not be loosened in a simple manner without special tools.

Fig. 3 shows an end view of the inner ring 6, the outer ring 7 and the center part 11, when these parts are mounted together, in the position shown in Fig. 2, i.e. when the cover 13 has been removed. From this view can be seen that the outer ring 7 in this embodiment has two axially oriented blind holes 7c, 7d, preferably substantially diametrically disposed, whereas the inner ring 6 has one such axial blind hole 6c. The center part 11 finally has preferably an axial blind hole 11a.

When the inner ring 6, the outer ring 7 and the center part 11 are arranged thus that their internal, radial grooves coincide, thus that the cam 10 of the center part can be pushed in to locking position, it is also possible to pull out the center part from such a locking position and the locking device is thereby unlocked, and can be unscrewed thus that the wheel bolt then can be reached and acted upon with conventional tools. As the inner ring 6 and the outer ring 7 are turnable relative to each other in relation to the center part 11, a mutual turning of one or more of them after the center part has reached its locking position, will result in that the cam 10 locks the outer ring 7 and thereby the inner ring 6, thus that the parts 6, 7, 11 can not be separated unless they are again turned mutually, thus that the radial grooves provided therein again will coincide so as to allow retraction of the center part 11 and the cam 10 attached thereto.

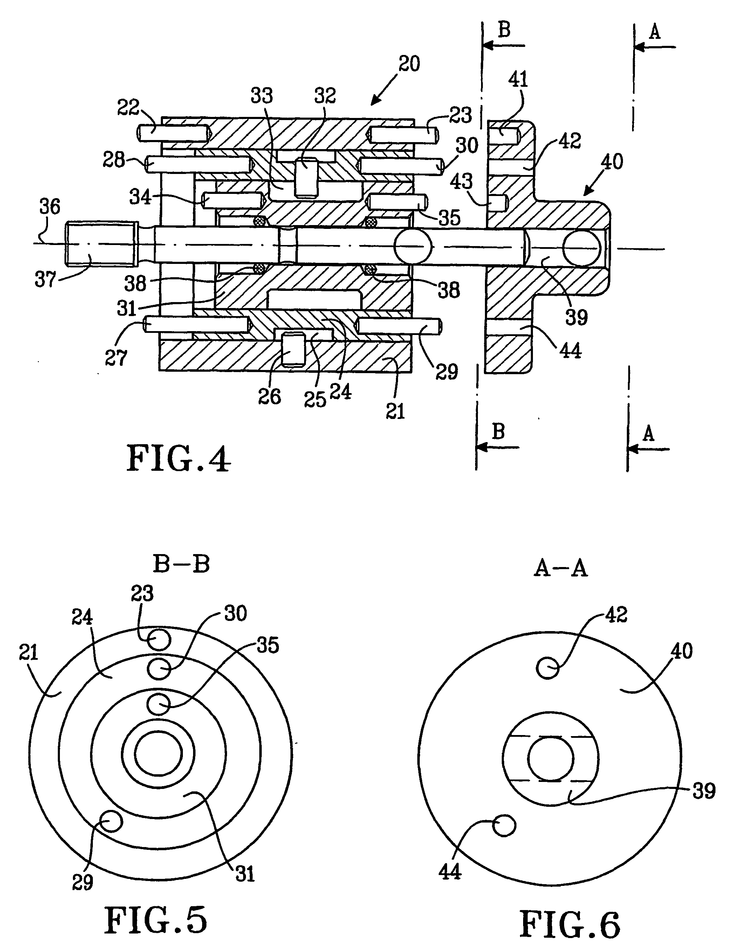

Instead of providing the different rings 6, 7 and the center part with index marks for making it possible to turn the different parts manually to mutual positions, which permit retraction of the center part 11, it is according to the invention proposed an unlocking fixture 20, which in Fig. 4 is shown in cross section In a preferred embodiment. By eliminating the index marks with digits and/or letters it is possible to obtain a substantially larger number of combinations by the mutual displacement of the different grooves.

In order to be able to loosen the locking device without such markings which are visible from the outside, it is now proposed an unlocking fixture according to the present invention, which by elements adapted to cooperate with the central threaded hole In the centre part of the locking device, and with projections or pins adapted under mutual turning of the fixture, of the inner and outer rings and centre part, to engage in blind holes arranged in annular gable surfaces in the inner and outer rings and the centre part facing the fixture.

In Fig. 4 is shown a preferred embodiment of the unlocking fixture 20 according to the invention and which incorporates an outer, cylindric sleeve 21, which in the illustrated, preferred embodiment is provided with a first cylindrical pin 22, adapted to project axially from one gable side of the sleeve, and a second cylindrical pin 23 adapted to project axially from the other gable side of the outer sleeve. In the outer sleeve 21 is inserted a second cylindrical sleeve 24, which is arranged to be easily rotatable in the outer sleeve 21, and axially movable to a limited extent in relation to the outer sleeve. The limited mobility is achieved in that the second cylindrical sleeve 24 along a portion of its external envelope surface is provided with a portion 25 with smaller diameter, and that a pin 26 anchored In the outer sleeve 21 projects radially into this portion 25 with smaller diameter in the second sleeve 24. On one of its gable sides the second sleeve 24 is provided with two pins 27, 28 which are angularly displaced relative to each other, and which e.g. can be diametrically opposed to each other and which project axially from the sleeve, and at the opposed gable of the second sleeve, there are two corresponding, axially projecting pins 29, 30.

The unlocking fixture 20 furthermore incorporates a third, inner cylindric sleeve 31, which is rotatably arranged inside the second, intermediate sleeve 24. Also this inner sleeve 31 is axially movable to a limited extent inside the second, intermediate sleeve 24, by means of cooperation between a peg 32 projecting radially from the intermediate sleeve 24 and a portion 33 of smaller diameter on the outer envelope surface of the inner sleeve 31. The inner sleeve 31 is equipped with cylindrical pins 34, 35 projecting axially from its opposite gable surfaces. Through the inner sleeve 31 extends a centrally arranged, substantially cylindrical spindle 36, which at one end has a threaded portion 37. The spindle 36 has a bigger axial length than the first, outer sleeve 21, and its intermediate portion is guided in a less wide intermediate portion of the bore in the inner sleeve 31. At both sides of this smaller intermediate portion the bore has end portions of larger diameter, whereby each one of the transitions between the smaller intermediate portion and the two end portions form a shoulder, against which engage stop rings arranged around the spindle, and which therefore secure the spindle 36 in the bore in the inner sleeve 31.

The end of the spindle 36 facing away from the threaded end portion 37, is arranged to receive a central bore 39 of a hub-formed end cover 40, which acts as an unlocking key for the unlocking fixture according to the invention. For this purpose the hub-formed cover 40 is provided at its side surface facing the unlocking fixture with a number of holes corresponding to the number of pins 29, 30, 35 in the unlocking fixture, i.e. in the embodiment illustrated four holes 41, 42, 43 and 44.

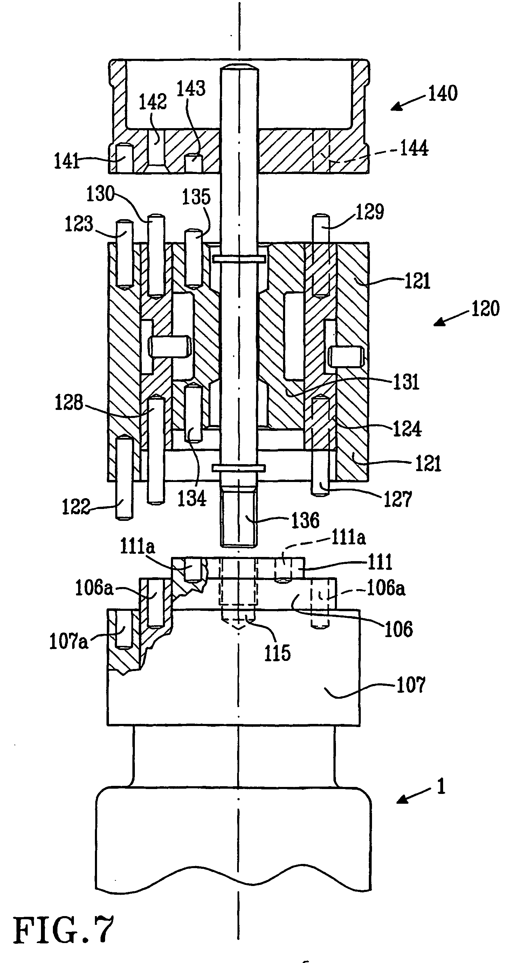

In Fig. 5 is shown in an end view along line B-B in Fig. 4 the positioning of the different sleeves 21, 24 and 31 with their pins 23, 29 and 35, resp. and the spindle, whereas Fig. 6 illustrates an end view along line A-A in Fig. 4 of the end cover 40 with the central opening 39 for the spindle in the unlocking fixture and the two through-holes 42 and 44. Fig. 7 shows in a schematic, partial cross section a portion of a wheel bolt 1 or another bolt, which shall be locked, with the locking device mounted thereon in accordance with Fig. 2, and which is schematically shown to incorporate a center part 111 non-rotatably affixed to the wheel bolt, an inner sleeve-formed ring rotatably arranged in the center part and an outer ring 107 rotatably arranged around the inner ring 106. The center part 111, the inner ring 106 and the outer ring 107 are all at their gable surfaces facing away from the wheel bolt provided with axially directed blind holes. In the embodiment shown in this figure the outer ring 107 is only provided with one such blind hole 107a, whereas the inner ring 106 and the centre part 111 each have two blind holes 106a and 111a, respectively.

The center part 111 has an axially directed, central threaded blind hole 115, which in the position shown in the drawing figure, i.e. when the end cover according to detail 13 in Fig. 2 is removed, instead is intended to receive the threaded end portion of a spindle 136 forming part in an unlocking fixture 120, mainly corresponding to the fixture 20 according to Fig. 4.

This unlockling fixture 120 in the same manner as the earlier described fixture, has three mutually rotatable sleeve-formed parts, 121, 124 and 131, arranged inside each other, the central centre part 131 of which has a centre bore, through which the spindle 136 extends in a turnable manner. At Its front end turned to the locking bolt 1 or the like to be unlocked, the gable surfaces are provided with pins 122, 127, 128 and 134, respectively, projecting different lengths, and which are intended to engage in the blind holes 107a, 106a resp. 111a, provided in the gable surfaces of the locking device 1, when the different parts have been turned to correct mutual positions, in which the cam described in connection with Figs. 1 and 2 can be pulled out of its engagement through the central and radial holes, such as earlier described. When this turning position has been reached the locking bolt is unlocked, but for making it possible to retract the cam, thus that the locking insert of the loking device is removed and permits unscrewing of the bolt it is required that the unlocking fixture 120 has the ability of seizing the insert and this is preferably achieved in that, such as shown, the threaded portion of the spindle part 136 is screwed into the threaded centre hole 115 In the locking device, whereby the locking insert can be pulled axially out from its locking position.

At its end turned from the locking device, where the spindle projects the gable surfaces of the sleeves 121, 124 and 131 has axially projecting pins 123; 129, 130 and 135, which have a defined position in relation to the pins 122; 127, 128 and 134 projecting from the opposed gable surfaces of the sleeves. However, the different pins at the opposed gable surfaces need not have the same mutual positioning.

The unlocking fixture is supplemented with an end cover 140, which is centered around the spindle 136 and in its wall has a number of blind holes 141, 143 and a number of through-bores 142, 144. This end cover 140 forms a key for the unlocking fixture and due to the positioning of these holes and bores 141, 143, 142 and 144, the unlocking fixture can cause the locking device to be opened with simple turning motions.

The function of the fixture is the following:
When the end cover 13 (see Fig. 1) has been removed from the locked device, thus that the position illustrated in Fig. 2 has been reached, the cylindrical pin 136 is inserted and is tightened in the thread 115 in the center part 111. The sleeves 121, 124 and 131 are combined to a unit, i.e. with the sleeve 121 outermost and the sleeve 131 innermost and with the sleeve 124 located between them. The pins 122 or 127, 128 projecting most are positioned against corresponding holes 107a and 106a, respectively in the outer or the intermediate sleeve. The end cover 140 is moved down over the spindle 136 projecting from the rear end of the sleeves 121, 124 and 131. The end cover 140 together with the outer sleeve 121 is urged in a direction towards the locking device and is at the same time turned until the rear pins 129, 130 will be situated just in front of and enter in the corresponding bores 142, 144 in the end cover 140, and at continued turning the pins 127, 128 in the intermediate sleeve 124 will be situated just in front of the corresponding holes 106a and project into these. At continued turning and pressing the rearmost pins 135 In the inner sleeve 131 now will project into the blind hole 143 in the end cover 140, and thereby the inner sleeve 131 will be carried along at continued turning, until the front pins 134 project into corresponding holes 111a in the centre part of the locking device.

Hereupon continued turning is impossible as all pins and holes are now in mutual engagement, and if the correct end cover 140 has been used this means that mutually turnable parts 106, 107 and 111 of the locking device are situated In a position where a straight passage through the interior of the locking device has been established, and by pulling out the unlocking fixture axially the center part 111 of the locking device to join in the motion, whereupon the remainder of the locking device can be easily unscrewed thus that the wheel bolt will be accessible to common tools.

The invention is not limited to the embodiment illustrated in the accompanying drawing figures and described in connection thereto but variants and modifications are possible if within the scope of the invention as defined by the following claims.

## Claims

1. Unlocking fixture (20; 120) for unlocking a locking device for a wheel bolt (1) of the type which is equipped with a bolt head (2) and a threaded shaft portion, whereby the bolt head on its end facing away from the bolt shaft is provided with a part acting as a key grip, and a coaxial, threaded bore (3), formed as a blind hole, which opens at the end of the bolt facing away from the shaft portion, whereby in the bolt head in the area nearest to the end of the bolt facing away from the shaft portion are provided at least two recesses (4) extending radially from the bore, and where a screw (5) is tightenable in the coaxial bore (3) provided in the bolt head, whereby the screw is provided with a radially extending recess (5a), and being arranged in its position screwed into the bore in the bolt head, to extend through and support a first, inner rotatable ring (6) and a second, outer rotatable ring (7) arranged coaxially therewith, whereby each one of the inner and outer ring is provided with a through-opening (6a, 7a), having substantially the same dimensions, and where from each one of these through-openings extends a continuous radial groove (6b, 7b), which continuous radial grooves have substantially the same measures as the radially extending recess (5a) in the screw, and the Inner and outer ring are rotatably arranged about the screw and relative to each other, thus that the continuos radial grooves (6b, 7b) and the radially extending recess (5a) by mutual rotation can be brought to coincide and thereby form a continuous channel from the end of the screw facing away from the bolt head and till the area around the bore in the bolt head, and where an axially projecting cam (10) provided on a hub-shaped center part (11), is arranged to be inserted in the continuous channel, thus that Its outer cam part is situated In one of the recesses (4) in the bolt head and its inner cam part in a space between the Inner ring and the outer ring, whereby the inner and outer rings by rotation relative to each other are adjustable thus that portions of the channel formed by the through-holes and the radially extending recess are angularly displaced and thereby preventing the outer and/or inner cam part from being pulled out, said unlocking fixture (20; 120) being constituted by an unlocking device which is separate from the locking device, and equipped with means adapted to co-operate with a central threaded hole in the centre part of the locking device,
**characterized therein,**
that the unlocking fixture (20;120) is constituted by a separate device equipped with a spindle (36; 136) adapted to cooperate with the central threaded hole (15; 115) in the centre part (11; 111) of a wheel bolt (1), and with projections or pins (22;27, 28, 34; 122, 127, 128, 134) adapted to engage in blind holes (106a, 107a, 111a) of said bolt (1) during mutual turning of the fixture (20; 120), and the inner and outer rings (6, 7; 106, 107) relative to the centre part (11; 111), said blind holes being provided in annular gable surfaces in the inner and outer rings and the centre part facing the fixture (20; 120), and
that the fixture incorporates a number of sleeves (21, 24, 31; 121, 124, 134) arranged concentric inside each other and being mutually turnable, and which at their front and rear end gables are provided with axially projecting pins, projecting in forward direction (22, 27, 28, 34; 122, 127, 128, 134), and in rearward direction (23, 29, 30, 35; 123, 129, 130, 135) and an end cover (40; 140) which is connectable to the sleeves and is provided with holes (41, 42, 43, 44; 141, 142, 143, 144) for receiving the rearwardly directed pins from the sleeves, whereas the forwardly directed pins at engagement against the exposed end are arranged to engage in said blind holes (107a, 106a, 111a) in order thereby, at turning of the rings, to form the continuous channel which permits retraction of the arresting centre part (11,111) of the locking device.

2. Unlocking fixture as claimed in claim 1,
**characterized therein,**
that the end cover (40; 140) is connectable to the sleeves (21, 24, 31; 121, 124, 134) of the fixture by means of the spindle (36; 136), which extends through the Inner sleeve (31; 131) and at its end turned away from the end cover (40; 140) is provided with a threaded portion (37) intended to cooperate with the threaded hole (15, 115) in the center part (11,111).

## Patentansprüche

1. Entriegelungsvorrichtung (20; 120) zum Entriegeln einer Verriegelungseinrichtung für einen Radbolzen (1) von der Art, welche mit einem Bolzenkopf (2) und einem Gewindeschaftabschnitt ausgestattet ist,
wobei der Bolzenkopf an seinem vom Bolzenschaft weg weisenden Ende mit einem als ein Schlüsselgriff wirkenden Teil und einer als Sackloch ausgebildeten koaxialen Gewindebohrung (3), welche sich an dem vom Schaftabschnitt weg weisenden Ende des Bolzens öffnet, versehen ist,
wobei im Bolzenkopf in dem Bereich, welcher dem Bolzenende, das vom Schaftabschnitt weg weist, am nächsten ist, wenigstens zwei sich von der Bohrung radial erstreckende Ausnehmungen (4) vorgesehen sind, und wobei eine Schraube (5) in der im Bolzenkopf vorgesehenen koaxialen Bohrung (3) festziehbar ist, wobei die Schraube mit einer sich radial erstreckenden Ausnehmung (5a) versehen ist und in ihrer in die Bohrung im Bolzenkopf geschraubten Stellung angeordnet ist, um sich durch einen ersten inneren drehbaren Ring (6) und einen koaxial dazu angeordneten zweiten äußeren drehbaren Ring (7) zu erstrecken und diese zu halten,
wobei sowohl der innere als auch der äußerer Ring mit einer Durchgangsöffnung (6a, 7a) versehen ist, welche im Wesentlichen die gleichen Abmessungen aufweist,
und wobei sich von jeder dieser Durchgangsöffnungen eine durchgängige radiale Nut (6b, 7b) erstreckt, wobei die durchgängigen radialen Nuten im Wesentlichen die gleichen Abmessungen wie die sich radial erstreckende Ausnehmung (5a) in der Schraube aufweisen,
und wobei der innere und äußere Ring drehbar um die Schraube und relativ zueinander angeordnet sind, so dass die durchgängigen radialen Nuten (6b, 7b) und die sich radial erstreckende Ausnehmung (5a) durch wechselseitige Drehung dazu gebracht werden können zusammenzufallen und **dadurch** einen durchgängigen Kanal vom vom Bolzenkopf weg weisenden Ende der Schraube und bis zum Bereich um die Bohrung im Bolzenkopf auszubilden,
und wobei eine axial hervorragende Nocke (10), welche an einem nabenförmigen Mittelteil (11) vorgesehen ist, angeordnet ist, um in den durchgängigen Kanal eingeführt zu werden, so dass ihr äußerer Nockenteil in einer der Ausnehmungen (4) im Bolzenkopf und ihr innerer Nockenteil in einem Raum zwischen dem inneren Ring und dem äußeren Ring angeordnet ist,
wobei die inneren und äußeren Ringe durch Drehung relativ zueinander so einstellbar sind, dass Abschnitte des durch die Durchgangslöcher und die sich radial erstreckende Ausnehmung ausgebildeten Kanals winklig versetzt sind, und **dadurch** verhindern, dass der äußere und/oder innere Nockenteil herausgezogen wird,
wobei die Entriegelungsvorrichtung (20; 120) durch eine Entriegelungseinrichtung gebildet wird, welche von der Verriegelungseinrichtung separat ist, und welche mit Mitteln ausgestattet ist, die eingerichtet sind, um mit einem mittleren Gewindeloch im Mittelteil der Verriegelungseinrichtung zusammenzuwirken,
**dadurch gekennzeichnet,**
**dass** die Entriegelungsvorrichtung (20; 120) durch eine separate Einrichtung gebildet wird, welche mit einer Spindel (36; 136), die dazu eingerichtet ist, mit dem mittleren Gewindeloch (15; 115) im Mittelteil (11; 111) eines Radbolzens (1) zusammenzuwirken, und mit Vorsprüngen oder Stiften (22; 27, 28, 34; 122, 127, 128, 134) ausgestattet ist, die eingerichtet sind, um während eines wechselseitigen Drehens der Vorrichtung (20; 120) und der inneren und äußeren Ringe (6, 7; 106, 107) relativ zum Mittelteil (11; 111) mit Sacklöchern (106a, 107a, 111a) des Bolzens (1) in Eingriff zu treten, wobei die Sacklöcher in ringförmigen Giebelflächen in den inneren und äußeren Ringen und dem der Vorrichtung (20; 120) gegenüberliegenden Mittelteil vorgesehen sind, und
**dass** die Vorrichtung eine Zahl von Hülsen (21, 24, 31; 121, 124, 134), welche konzentrisch ineinander angeordnet und wechselseitig drehbar sind, und welche an ihren Vorder- und Hinterendengiebeln mit axial hervorragenden Stiften versehen sind, die in einer Vorwärtsrichtung (22, 27, 28, 34; 122, 127, 128, 134) und in einer Richtung nach hinten (23, 29, 30, 35; 123, 129, 130, 135) hervorragen, und eine Endabdeckung (40; 140) umfasst, welche mit den Hülsen verbunden werden kann und mit Löchern (41, 42, 43, 44; 141, 142, 143, 144) zur Aufnahme der von den Hülsen nach hinten ausgerichteten Stifte versehen ist, während die nach vorne ausgerichteten Stifte im Eingriff gegen das freie Ende angeordnet sind, um mit den Sacklöchern (107a, 106a, 111 a) in Eingriff zu treten, um **dadurch** beim Drehen der Ringe den durchgängigen Kanal zu bilden, welcher ein Zurückziehen des arretierenden Mittelteils (11, 111) der Verriegelungseinrichtung ermöglicht.

2. Entriegelungsvorrichtung nach Anspruch 1,
**dadurch gekennzeichnet,**
**dass** die Endabdeckung (40; 140) mit den Hülsen (21, 24, 31; 121, 124, 134) der Vorrichtung mittels der Achse (36; 136) verbunden werden kann, welche sich durch die innere Hülse (31; 131) erstreckt und an ihrem von der Endabdeckung (40; 140) abgewandten Ende mit einem Gewindeabschnitt (37) versehen ist, welcher mit dem Gewindeloch (15, 115) im Mittelteil (11, 111) zusammenwirken soll.

## Revendications

1. Accessoire de déverrouillage (20 ; 120) pour déverrouiller un dispositif de verrouillage d'un boulon de roue (1) du type qui est muni d'une tête de boulon (2) et d'une partie d'arbre filetée, dans lequel la tête de boulon, sur son extrémité dirigée à l'opposé de l'arbre de boulon, est munie d'une partie agissant comme un élément de préhension de clef, et d'un alésage fileté coaxial (3), formé sous la forme d'un trou aveugle, qui s'ouvre à l'extrémité du boulon dirigée à l'opposé de la partie d'arbre, dans lequel dans la tête de boulon, dans la zone la plus proche de l'extrémité du boulon dirigée à l'opposé de la partie d'arbre, sont agencés au moins deux évidements (4) s'étendant radialement à partir de l'alésage, et où une vis (5) peut être serrée dans l'alésage coaxial (3) agencé dans la tête de boulon, dans lequel la vis est munie d'un évidement s'étendant radialement (5a), et est agencée dans sa position vissée dans l'alésage dans la tête de boulon, pour s'étendre à travers un premier anneau rotatif intérieur (6) et un second anneau rotatif extérieur (7) agencé coaxialement par rapport à celui-ci, et pour les supporter, de sorte que chacun des anneaux intérieur et extérieur est muni d'une ouverture traversante (6a, 7a) ayant sensiblement les mêmes dimensions, et où à partir de chacune des ces ouvertures traversantes s'étend une gorge radiale continue (6b, 7b), lesquelles gorges radiales continues ont sensiblement les mêmes mesures que l'évidement s'étendant radialement (5a) dans la vis, et les anneaux intérieur et extérieur sont agencés de manière rotative autour de la vis et l'un par rapport à l'autre, pour qu'ainsi les gorges radiales continues (6b, 7b) et l'évidement s'étendant radialement (5a), par une rotation mutuelle, puissent être amenés à coïncider et à former ainsi un canal continu à partir de l'extrémité de la vis dirigée à l'opposé de la tête de boulon et jusqu'à la zone autour de l'alésage dans la tête de boulon, et où une came faisant saillie axialement (10) agencée sur une partie centrale en forme de moyeu (11) est agencée pour être insérée dans le canal continu, pour qu'ainsi sa partie de came extérieure soit située dans un premier des évidements (4) dans la tête de boulon, et sa partie de came intérieure dans un espace entre l'anneau intérieur et l'anneau extérieur, dans lequel les anneaux intérieur et extérieur, par une rotation relative l'un par rapport à l'autre, sont ajustables pour qu'ainsi les parties du canal formé par les trous traversants et l'évidement s'étendant radialement soient déplacées de manière angulaire et en empêchant ainsi la partie de came extérieure et/ou intérieure d'être retirée; ledit accessoire de verrouillage (20 ; 120) étant constitué par un dispositif de déverrouillage qui est séparé du dispositif de verrouillage, et étant muni de moyens adaptés pour coopérer avec un trou fileté central situé dans la partie centrale du dispositif de verrouillage,
**caractérisé en ce que**
l'accessoire de déverrouillage (20 ; 120) est constitué d'un dispositif séparé muni d'une broche (36 ; 136) adaptée pour coopérer avec le trou fileté central (15 ; 115) dans la partie centrale (11 ; 111) d'un boulon de roue (1), et de saillies ou pointes (22 ; 27, 28, 34 ; 122, 127, 128, 134) adaptées pour venir en prise dans des trous aveugles (106a, 107a, 111a) dudit boulon (1) pendant une rotation mutuelle de l'accessoire (20 ; 120) et des anneaux intérieur et extérieur (6, 7 ; 106, 107) par rapport à la partie centrale (11 ;111), lesdits trous aveugles étant agencés dans des surfaces pignons annulaires dans les anneaux intérieur et extérieur et la partie centrale dirigée vers l'accessoire (20 ; 120), et
l'accessoire comporte plusieurs manchons (21, 24, 31 ; 121, 124, 131) agencés de manière concentrique les uns à l'intérieur des autres, et pouvant tourner mutuellement, et qui au niveau de leurs pignons d'extrémité avant et arrière sont munis de pointes faisant saillie axialement faisant saillie dans la direction vers l'avant (22, 27, 28, 34 ; 122, 127, 128, 134) et dans la direction vers l'arrière (23, 29, 30, 35 ; 123, 129, 130, 135), et un recouvrement d'extrémité (40 ; 140) qui peut être connecté aux manchons et qui est munie de trous (41, 42, 43, 44 ; 141, 142, 143, 144) pour recevoir les pointes dirigées vers l'arrière à partir des manchons, tandis que les pointes dirigées vers l'avant, au niveau d'une mise en prise contre l'extrémité exposée, sont agencées pour venir en prise dans lesdits trous aveugles (107a, 106a, 111a) pour former ainsi, lors de la rotation des anneaux, le canal continu qui permet une rétraction de la partie centrale d'arrêt (11 ; 111) du dispositif de verrouillage.

2. Accessoire de déverrouillage selon la revendication 1, **caractérisé en ce que** le recouvrement d'extrémité (40 ; 140) peut être connecté aux manchons (21, 24, 31 ; 121, 124, 131) de l'accessoire par l'intermédiaire de la broche (36 ; 136), qui s'étend à travers le manchon intérieur (31 ; 131), et au niveau de son extrémité tournée à l'opposé du recouvrement d'extrémité (40 ; 140) est munie d'une partie filetée (37) prévue pour coopérer avec le trou fileté (15, 115) dans la partie centrale (11, 111).
